(19) Europäisches Patentamt / European Patent Office / Office européen des brevets

(11) **EP 1 594 128 B1**

(12) **EUROPEAN PATENT SPECIFICATION**

(45) Date of publication and mention
of the grant of the patent:
**24.08.2011  Bulletin 2011/34**

(51) Int Cl.:
***G11B 7/135*** *(2006.01)*

(21) Application number: **05252748.8**

(22) Date of filing: **04.05.2005**

(54) **Optical element, objective optical system, optical pick-up apparatus, and drive apparatus of optical disk**

Optisches Element, Objektiv-System, optische Abtastvorrichtung, und optisches Plattenlaufwerk

Elément optique, système d'objectif, capteur optique et appareil de commande pour lecteur de disques optiques

(84) Designated Contracting States:
**AT BE BG CH CY CZ DE DK EE ES FI FR GB GR HU IE IS IT LI LT LU MC NL PL PT RO SE SI SK TR**

(30) Priority: **07.05.2004  JP 2004138635**

(43) Date of publication of application:
**09.11.2005  Bulletin 2005/45**

(73) Proprietor: **Konica Minolta Opto, Inc.
Hachioji-shi,
Tokyo 192-8505 (JP)**

(72) Inventors:
 • **Kimura, Tohru
  Hachioji-shi
  Tokyo 192-8505 (JP)**

 • **Sakamoto, Katsuya
  Hachioji-shi
  Tokyo 192-8505 (JP)**

(74) Representative: **Nicholls, Michael John
J.A. Kemp & Co.
14 South Square
Gray's Inn
London
WC1R 5JJ (GB)**

(56) References cited:
| | |
|---|---|
| WO-A-03/060892 | WO-A-03/091764 |
| WO-A-2004/012188 | US-A1- 2003 067 686 |
| US-A1- 2004 022 164 | US-A1- 2004 047 269 |

## Description

This application claims priority from Japanese Patent Application No. 2004-138635 filed on May 7, 2004.

## TECHNICAL FIELD

The present invention relates to an optical element (herein after, there is a case where it is called wavelength selection element) adequate when it is used for an optical pick-up apparatus by which the recording and/or reproducing of the information can be compatibly conducted on different kinds of optical disks, an objective optical system, an optical pick-up apparatus, and a drive apparatus of optical disks.

## BACKGROUND ART

Recently, in the optical pick-up apparatus, the wavelength-shortening of the laser light source used as the light source for reproducing of the information recorded in an optical disk or recording of the information in the optical disk is advanced, for example, a blue violet laser light source of wavelength 400 - 420 nm such as a blue violet semiconductor laser, or a blue violet SHG laser which conducts the wavelength conversion of the infrared semiconductor laser by using the second harmonic wave, is putting to a practical use. When these blue violet laser light sources are used, in the case where an objective optical system of the same numerical aperture (NA) as DVD (Digital Versatile Disk) is used, the information of 15 - 20 GB can be recorded in an optical disk of diameter 12 cm, and in the case where NA of the objective optical system is increased to 0.85, the information of 23 - 25 GB can be recorded in the optical disk of diameter 12 cm. Hereinafter, in the present specification, the optical disk and photo-magnetic disk for which the blue violet laser light source is used, are generally referred as "high density optical disk".

Hereupon, only by saying that the information can be adequately recorded/reproduced for such a high density optical disk, it can not be said that a value as a product of the optical disk player/recorder is enough. In the present time, when the actuality that DVD or CD (Compact Disk) in which various information are recorded is put in a market, is based on, by only a case where the information can be recorded/reproduced for the high density optical disk, it is insufficient, and for example, a fact that the information can be adequately recorded/reproduced in the same manner also for a user-own DVD or CD, introduces to a fact that a commercial value as the optical disk player/recorder is increased. For such a background, it is desired that the optical pick-up apparatus mounted in the optical disk player/recorder for the high density optical disk has a performance by which the information can be adequately recorded/reproduced while the compatibility is being kept with also any one of optical disks of the high density optical disk, DVD and CD.

Herein, when the recording and/or reproducing of the information is conducted on, for example, the high density optical disk, DVD and CD, by using one optical pick-up apparatus, there is a problem that values of numerical apertures NA for each of optical disks are different in such a manner that the high density optical disk is 0.85, DVD is 0.6, CD is 0.45.

Accordingly, when, by using the same objective lens, the recording and/or reproducing of the information is conducted on all optical disks, the necessity that the numerical aperture of the objective optical system is switched during the exchange to the different optical disk is generated. It is general that the switching of the large and small numerical apertures is conducted by changing the light flux diameter, however, it is considered that, for example, the liquid crystal shutter is driven in timed relationship with the timing of switching to the different optical disk, and the diameter of the light flux passing this liquid crystal shutter is changed.

However, when the liquid crystal shutter is used for the purpose that the light flux diameter is changed, the electric control system for controlling the liquid crystal shutter becomes necessary, and the production cost is increased. Further, because the light which can pass the liquid crystal shutter, is only a polarized light having a predetermined oscillation direction, it is necessary that the lens design is conducted considering the oscillation direction for the purpose that the irradiation light is effectively passed, and there is also a problem that the degree of the freedom of the design work is limited.

In contrast to this, in Tokkaihei No. 11-194207 (hereinafter, Patent Document 1), a diffraction type filter in which a zone plate which has the first area structuring the central part of the filter, and the second area positioned outside the central part of the filter, and the aberration correction function to only any one hand light of the light of two wavelengths $\lambda 1$, $\lambda 2$ which are different from each other, is formed in the first area, and the diffraction lattice which practically has the light shielding function only to one hand light of the light of 2 wavelengths $\lambda 1$, $\lambda 2$, is formed in the second area, is disclosed. When such a diffraction type filter is used, the recording and/or reproducing of the information can be compatibly conducted on DVD and CD.

However, the diffraction type filter written in Patent Document 1 is a filter which corresponds to light fluxes of different 2 wavelengths, and is inadequate for the use for the optical pick-up apparatus by which the recording and/or reproducing of the information is conducted on optical disks more than 3 kinds of, for example, the high density optical disk, DVD, CD.

WO-A-2004/012188, which is used for the two-part form delimitation, WO-A-03/091764 and WO-A-03/060892 each disclose optical elements for optical pick-up apparatuses for use with light fluxes at three different wavelengths.

## SUMMARY OF THE INVENTION

The present invention is attained in view of the conventional problem, and the object of the present invention is to provide an optical pick-up apparatus by which, although the recording and/or reproducing of the information can be adequately conducted on different 3 kinds of optical disks, the size reduction can be intended, and a drive apparatus of the optical disk, and an objective optical system and an optical element used for it.

The first aspect of the present invention is an optical element as defined in claim 1.

The second aspect of the present invention is an objective optical system as defined in claim 10.

The third aspect of the present invention is an optical pick-up apparatus as defined in claim 11.

The fourth aspect of the present invention is a drive apparatus for an optical disk as defined in claim 13.

## BRIEF DESCRRIPTION OF THE DRAWINGS

Fig. 1 is a sectional view showing an example of an optical element (wavelength selection element).

Fig. 2 is a sectional view showing another example of an optical element (wavelength selection element).

Fig. 3 is a view generally showing a structure of an optical pick-up apparatus PU according to the present embodiment.

## DETAILED DESCRIPTION

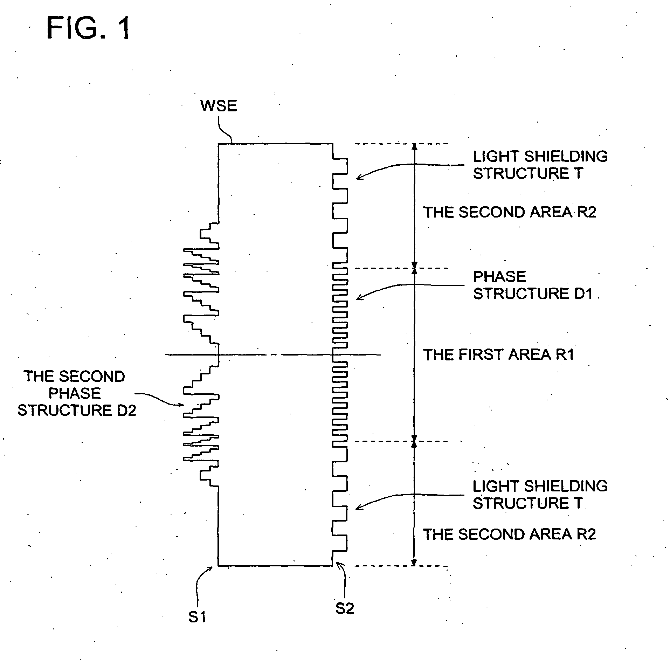

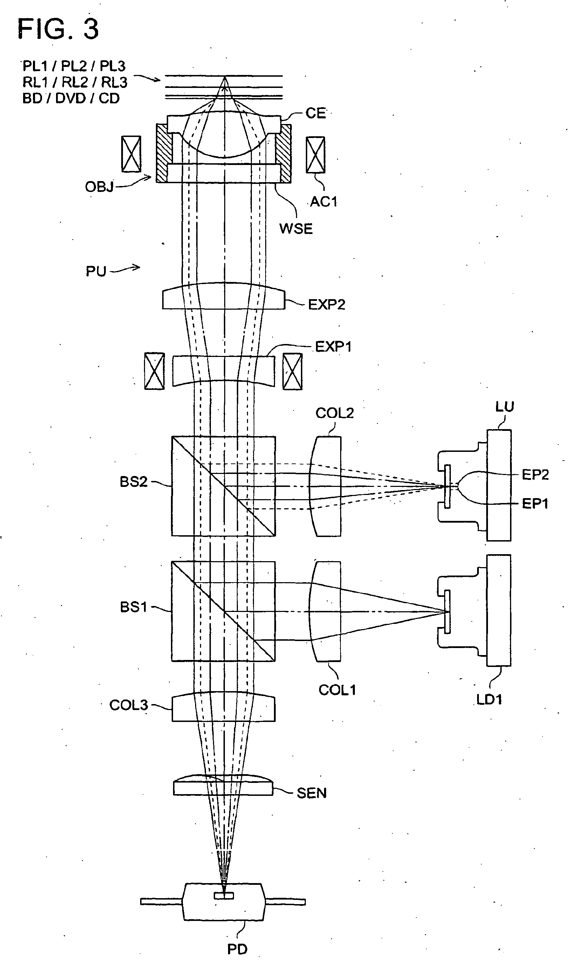

Referring to Fig. 1, an example of an optical element (wavelength selection element) of the present invention will be described below. The wavelength selection element WSE generally shown in Fig. 1, as will be described later referring to Fig. 3, structures a light converging element CE and an objective optical system OBJ. The optical surface S2 of the optical disk side of the wavelength selection element WSE is divided into the first area R1 corresponding to the numerical aperture NA3 which structures a central part including the optical axis, and the second area R2 which is positioned in the outside of the first area R1, and in the first area R1, a phase structure D1 (hereinafter, there is also a case where called the first phase structure) by which the first light flux and the second light flux are not diffracted, but the third light flux is diffracted, is formed, and in the second area R2, a light-shielding structure by which the first light flux and the second light flux are transmitted, and a light-shielding structure T which is capable of substantially shielding only the third light flux, is formed.

Herein, a phrase "a light shielding structure being capable of substantially shielding a predetermined light flux" indicates that the predetermined light flux passing the light-shielding structure T is made not to effectively contribute to the recording and/or reproducing conducted on the optical disk. As the light-shielding structure T, for example, when the predetermined light flux passing the light-shielding structure T is diffracted, a structure in which the predetermined light flux is made not to contribute to the recording and/or reproducing on the optical disk, or by a method by which the phase is dislocated by adding the optical path difference to the predetermined light flux incident on the light-shielding structure T, when mutual light fluxes passed the convex part and the concave part of the light-shielding structure T are cancelled with each other, a structure by which they are made not so as to contribute to the recording and/or reproducing on the optical disk, are listed. The light-shielding structure T may be provided on the whole of the second area R2, or on a part of the second area R2.

In the present invention, a phrase that "a phase structure being capable of compensating aberration of a predetermined light flux" expresses that the phase structure has an action to reduce the aberration on the wave-front of the light conversing spot formed on the optical disk by the predetermined light flux, to the predetermined light flux passed the phase structure.

The shape of the phase structure or the light-shielding structure, used in the present invention, when they have the above action, particularly they are not limited, however, a structure, in which, for example, patterns whose sectional shape including the optical axis is rectangular, are arranged concentric circularly, is listed.

The step difference of this rectangular pattern can be adequately set by the action to be given to the light flux passing the phase structure or the light-shielding structure.

For example, when the depth of the step difference of the phase structure or the light-shielding structure is d, the wavelength of the light flux passing the phase structure D1 is $\lambda$, and the refractive index of the wavelength selection element WSE to the light flux of wavelength $\lambda$ is n, the height of the step difference can be designed by using X expressed by the following expression.

$$X = (d \times (n\lambda - 1))/\lambda$$

When the light flux of the wavelength λ passing the phase structure or the light-shielding structure is transmitted, it is preferable that the following expression is satisfied.

$$0 \leq |INT(X) - 1| \leq 0.1$$

Herein, INT (X) expresses a natural number closest to X. When set to such a step difference, the optical path difference generated by the step difference becomes about integer times of the wavelength λ, and the light flux of the wavelength λ passing the phase structure or light-shielding structure can be transmitted as it is without receiving any action.

Further, it can be considered, for example, that the step difference is structured so that X satisfies the following expression.

$$0.4 \leq |INT(X) - 1| < 0.6$$

When the step difference is set to such a height, because the height of the step difference becomes about a half integer times of the wavelength λ, the phase of the light flux passing the concave convex part of the rectangular pattern is dislocated by π to the light flux of λ passing the phase structure. Accordingly, almost the light amount of the light flux incident on the phase structure D1 is distributed into 1-order diffraction light and -1-orer diffraction light, and the light flux is bended.

The height of the step difference in the phase structure or light-shielding structure is not limited to these ones, but can appropriately be set corresponding to the action to the passing light flux.

When the phase structure or the light-shielding structure is formed at a position through which a plurality of light fluxes pass, by combining the relationships described above to respective light fluxes, when the light flux of a part is practically passed, and the other light fluxes are diffracted, the aberration compensation action can be given, or the light shielding action can be practically given.

Referring to Fig. 1, further concrete structure will be described below. As the phase structure D1, a structure in which patterns whose sectional shape including the optical axis is rectangular are arranged on the concentric circle, is listed. The step difference d1 of the rectangular pattern is set to a height which satisfies d1 = 5 · λ1/(N1 -1) ≈ 3 · X2/(N2 - 1) ≈ 2.5 · λ3/(N3 - 1).

Herein, N1 is a refractive index of the wavelength selection element WSE in the first wavelength λ1, N2 is a refractive index of the wavelength selection element WSE in the second wavelength λ2, and N3 is a refractive index of the wavelength selection element WSE in the third wavelength λ3.

That is, the step difference of the phase structure D1 is set to a height satisfying the following expressions. When

$$x1 = (d1 \times (N1\lambda1 - 1))/\lambda1,$$

$$x2 = (d1 \times (N2\lambda2 - 1))/\lambda2,$$

$$x3 = (d1 \times (N3\lambda3 - 1))/\lambda3,$$

then, it is made as follows,

$$0 \le |INT(x1) - 1| \le 0.1,$$

$$0 \le |INT(x2) - 1| \le 0.1$$

and

$$0.4 \le |INT(x3) - x3| \le 0.6.$$

Where, INT (x1), INT (x2) and INT (x3) respectively express a natural number closest to x1, a natural number closest to x2 and a natural number closest to x3, and in the example described above, INT (x1) = 5, INT (x2) = 3, INT (x3) = 2.

Accordingly, because the optical path difference generated by this step difference d1 is 5 times of the first wavelength $\lambda 1$, and 3 time of the second wavelength $\lambda 2$, the first light flux and the second light flux transmit as they are, without receiving any action by the phase structure D1.

Because the optical path difference generated by this step difference d1 is a half integer times of the third wavelength $\lambda 3$, and the phase of the third light flux passing the concave convex part of the rectangular pattern is dislocated by $\pi$, almost light amount of the third light flux incident on the phase structure D1 is distributed into the 1-order diffraction light and -1-order diffraction light. The phase structure D1 is designed in such a manner that the 1-order diffraction light of them is light converged on the information recording surface (RL3) of the third optical disk (for example, CD). Herein, the paraxial diffraction power of the phase structure D1 is negative, and the third light flux incident on the phase structure D1 is converted into the divergent light flux and incident on the light converging element CE. In this case, the spherical aberration in the under compensation direction generated by the magnification change of the light converging element CE, and the spherical aberration in the over compensation direction generated due to the difference of thickness between the protective layer of the high density optical disk and that of CD, are cancelled out, and the 1-order diffraction light of the third light flux is light converged on the information recording surface (RL3) under the condition that the spherical aberration is compensated. Herein, the diffraction power PD is defined by PD = $-2 \cdot dor \cdot B2$ by the 2-order diffraction surface coefficient B2 of the optical path difference function $\phi$ which will be described later, and the diffraction order dor of the diffraction light used for the recording/reproducing of the information on the optical disk. In the present specification, a phrase "diffracts and converts into the divergent light flux" means that the diffraction power defined by the above expression is negative".

Further, also the light-shielding structure T is, as the same as the phase structure D1, a structure in which patterns whose sectional shape including the optical axis is rectangular, are arranged on the concentric circle, and the step difference d2 of the rectangular pattern is set to a height satisfying d2 = $5 \cdot \lambda_1/(N1 - 1) \approx 3 \cdot \lambda 2/(N2 - 1) \approx 2.5 \cdot \lambda 3/(N3 - 1)$.

That is, the step difference of the light-shielding structure T is set to a height satisfying the following expressions.

When

$$x1 = (d2 \times (N1\lambda 1 - 1)/\lambda 1$$

$$x2 = (d2 \times (N2\lambda 2 - 1)/\lambda 2$$

$$x3 = (d2 \times (N3\lambda 3 - 1)/\lambda 3,$$

then,

$$0 \le |INT(x1) - 1| \le 0.1,$$

$$0 \leq |\mathtt{INT(x2)} - 1| \leq 0.1,$$

and

$$0.4 \leq |\mathtt{INT(x3)} - x3| \leq 0.6.$$

Where, INT(x1), INT (x2), and INT (x3) respectively express a natural number closest to x1, a natural number closest to x2, and a natural number closest to x3, and in the example described above, INT(x1) = 5, INT(x2) = 3, INT(x3) = 2.

By the same principle as the phase structure D1, the first light flux and the second light flux transmit as they are, without receiving any action by the light-shielding structure T.

On the one hand, in the light-shielding structure T, when the concave convex part is one period, because the rectangular patterns are arranged so that the width of this 1 period is periodic, (in Fig. 1, the width of the period is made constant), the third light flux incident on the light-shielding structure receives the diffraction action, and almost of the light amount is distributed into the 1-order diffraction light and the -1-order diffraction light. The light-shielding structure T is designed in such a manner that this ± 1-order diffraction light become the flare component spreading a position sufficiently separated from a spot formed on the information recording surface (RL3) of the third optical information recording medium (for example, CD) by the phase structure D1. In this manner, because the third light flux passing the light-shielding structure T does not effectively contribute to the recording/reproducing on the third optical disk (for example, CD), the light-shielding structure T has a numerical aperture limit function corresponding to the numerical aperture NA3.

Hereupon, in the wavelength selection element WSE, although rectangular patterns are arranged so that the width Of one period of the concave convex part of the light-shielding structure T is constant, this arrangement may be allowed when the third light flux receives the diffraction action, further, when the diffraction light of the third light flux passing the light-shielding structure T has the periodicity so that the diffraction light spreads on the position sufficiently separated from the spot, and other than the arrangement in which the width of one period becomes constant, an arrangement in which the width of one period becomes small as facing the outer periphery, or the width of one period becomes large as facing the outer periphery, may also be allowed. According to the presently claimed invention, the width of one period of the patterns of the light-shielding structure becomes small as facing the outer periphery.

Further, on the optical surface S1 on the light source side of the wavelength selection element WSE, a second phase structure D2 by which the first light flux and the third light flux are not diffracted but the second light flux is diffracted, is formed. The second phase structure D2 is a structure in which patterns whose sectional shape including the optical axis is step-like, are arranged on the concentric circle, and in which the step is shifted by the height for the number of steps corresponding to the number of level surfaces (in Fig. 1, 4-steps), for each of the number of predetermined level surfaces (in Fig. 1, for 5-level), and from the shape, it is called saw-toothed type.

Hereupon, there are 2 examples in the structure in which patterns whose sectional shape including the optical axis is step-like, are arranged on the concentric circle. One is the saw-toothed type as described above, and the other one is a structure in which the step difference of the adjoining level surfaces is always one step, and this is called a continuous type. Hereupon, in Fig. 1, the case where the saw-toothed type is adopted is exemplified.

The saw-toothed type shown in Fig. 1 has an advantage that the spherical aberration change following the wavelength change of the incident light flux is smaller than the continuous type. The wavelength change of the incident light flux called herein is a change generated due to an individual dispersion of the semiconductor laser light source, or temperature change. In either type, the dislocation of the wave-front is generated little by little for each of steps following the wavelength change, however, in the continuous type, because this dislocation is macroscopically smoothly connected, the large spherical aberration is generated. On the one hand, in the saw-toothed type, because the dislocation of the wave-front is interrupted at a part at which the level surface is shifted for each of predetermined step differences (in Fig. 1, 4-steps), the spherical aberration is not generated when a macroscopic view is taken.

Herein, the step difference d3 of the step-like pattern is set to a height satisfying d3 = $2 \cdot \lambda 1/(\mathrm{N1} - 1) \approx 1.2 \cdot \lambda 2/(\mathrm{N2} - 1) \approx 1 \cdot \lambda 3/(\mathrm{N3} - 1)$. Herein, N1 is a refractive index of the wavelength selection element WSE in the first wavelength λ1, N2 is a refractive index of the wavelength selection element WSE in the second wavelength λ2, and N3 is a refractive index of the wavelength selection element WSE in the third wavelength λ3.

That is, the depth d3 of one step difference of the step-like patterns is set so as to satisfy the following relationships.

When x1 = $(\mathrm{d3} \times (\mathrm{N1}\lambda 1 - 1))/\lambda 1$, x3 = $(\mathrm{d3} \times (\mathrm{N3}\lambda 3 - 1))/\lambda 3$, then, $0 \leq |\mathrm{INT} (x1) - 1| \leq 0.1$, $0 \leq |\mathrm{INT} (x3) - 1| \leq 0.1$. Where, INT(x1), INT(x3) respectively express a natural number closest to x1, a natural number closest to x3.

Because the optical path difference generated by this step difference d3 is 2 times of the first wavelength λ1, and 1 time of the third wavelength $\lambda$3, the first light flux and the third light flux transmit as they are, without receiving any action by the second phase structure D2.

On the one hand, because the optical path difference generated by this step difference d3 is 1.2 times of the second wavelength $\lambda$2, the phase of the second light flux passing the level surface before or after the step difference is deviated by $2\pi/5$. Because one saw-tooth is divided into 5, the deviation of the phase of the second light flux is just $5 \times 2\pi/5 = 2\pi$ for one saw-tooth, and the 1-order diffraction light is generated. Herein, the paraxial diffraction power of the phase structure D1 is negative, the third light flux incident on the phase structure D1 is converted into the divergent light flux and is incident on the light converging element CE. In this case, the spherical aberration in the under compensation direction generated by the magnification change of the light converging element CE and the spherical aberration in the over compensation direction generated by the differences of the thickness between the protective layer of the high density optical disk and that of DVD are cancelled with each other, and the 1-order diffraction light of the second light flux is light-converged on the information recording surface (RL2) of the second optical disk (for example, DVD), under the condition that the spherical aberration is compensated.

Hereupon, the second phase structure D2 is formed only in the area corresponding to inside of the numerical aperture NA2, and because the spherical aberration due to the difference between the thickness of the protective layer of the high density optical disk and that of DVD is not compensated in the area of the outside of the numerical aperture NA2, the second light flux passed the area of the outside of the numerical aperture NA2 becomes a flare component spreading in the position sufficiently separated from the spot formed on the information recording surface (RL2) of the second optical disk (for example, DVD). Accordingly, because the wavelength selection element WSE used for the optical pick-up apparatus PU of the present embodiment has not only the aperture limit function corresponding to the numerical aperture NA3 of the third optical disk (for example, CD), but also the aperture limit function corresponding to the numerical aperture NA2 of the second optical disk (for example, DVD), the simplification of the structure of the optical pick-up apparatus or the reduction of the number of parts can be realized.

It is preferable that the light-shielding structure T formed in the second area in the present embodiment, is a structure in which patterns whose sectional shape including the optical axis is rectangular, are arranged about concentric circularly.

Further, when the step difference depth of the light-shielding structure is d2, the refractive index to the first light flux of the optical element is n1, and the refractive index to the second light flux of the optical element is n2, x1 and x2 expressed by the following expressions,

$$\text{x1} = (\text{d2} \times (\text{n1}\lambda 1 - 1))/\lambda 1$$

$$\text{x2} = (\text{d2} \times (\text{n2}\lambda 2 - 1))/\lambda 2,$$

respectively satisfy the following relational expressions.

$$0 \le |\text{INT (x1)} - 1| \le 0.1$$

$$0 \le |\text{INT (x2)} - 1| \le 0.1$$

Where, INT (x1), INT (x2) respectively express a natural number closest to x1, a natural number closest to x2.

In the optical pick-up apparatus according to the present embodiment, when, further, the refractive index to the third light flux of the optical element is n3, it is preferable that x3 expressed by the following expression satisfies the following relational expression.

$$\text{x3} = (\text{d2} \times (\text{n3}\lambda 3 - 1))/\lambda 3$$

$$0.4 \leq |INT(x3) - x3| \leq 0.6$$

Where, INT (x3) expresses a natural number closest to x3. Further, it is preferable that the first wavelength $\lambda 1$ and the second wavelength $\lambda 2$ satisfy the following relationship, and in that case, it is further preferable mode that the INT(x1) and INT(x2) satisfy the following relationship.

$$INT(x1) = 5$$

$$INT(x2) = 3$$

Further, the rectangular pattern may be arranged periodically, or aperiodically.

In the present embodiment, it is also one of preferable modes that the second area further has the second (a) area adjoining the outside of the first area and the second (b) area positioned at the outside of the second (a) area, and the light-shielding structure is formed in only either one area of the second (a) area or the second (b) area, and the other area is a continuous surface on which the light-shielding structure is not formed.

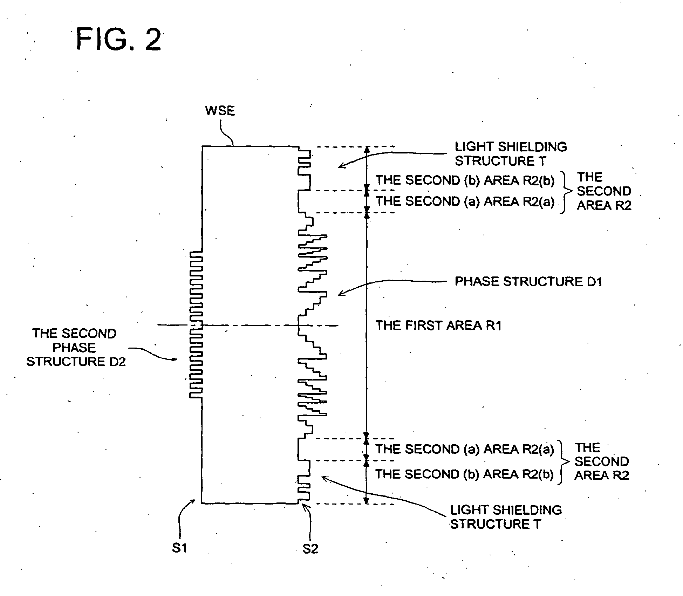

Referring to Fig. 2, another example of the optical element (wavelength selection element) of the present invention will be described below. The optical surface S2 on the optical disk side of the wavelength selection element WSE is divided into the first area R1 corresponding to the numerical aperture NA2, structuring the central part including the optical axis, and the second area R2 positioned at the outside of the first area R1, and the second area R2 further has the second (a) area R2(a) adjoining the outside of the first area R1 and the second (b) area R2(b) positioned at the outside of the second (a) area R2(a).

In the first area R1, the phase structure D1 which does not diffract the first light flux and the third light flux, and diffracts the second light flux, is formed, and on the optical surface S1 on the light source side, the second phase structure D2 which does not diffract the first light flux and the second light flux, and diffracts the third light flux, is formed. Because the respective functions or structures of the phase structure D1 and the second phase structure D2 in the wavelength selection element WSE in Fig. 2 are respectively the same as the second phase structure D2 and the phase structure D1 in the wavelength selection element WSE in Fig. 1, herein, detailed description will be neglected.

In the wavelength selection element WSE in Fig. 2, the light-shielding structure T which transmits the first light flux and the second light flux, and practically has the light shielding function only for the third light flux, is formed. This light-shielding structure T is a structure in which patterns whose sectional shape including the optical axis is rectangular, are arranged on the concentric circle, and the step difference d1 of the rectangular pattern is, in the same manner as the light-shielding structure T of the wavelength selection element WSE in Fig. 1, set to the height satisfying $d1 = 5 \cdot \lambda 1/(N1 - 1) \approx 3 \cdot \lambda 2/(N2 - 1) \approx 2.5 \cdot \lambda 3/(N3 - 1)$. Accordingly, the first light flux and the second light flux transmit this light-shielding structure T as they are, without receiving any action by this light-shielding structure T.

Then, this rectangular pattern is, when the concave convex part is made one period, arranged aperiodically so that the diffraction efficiency of the $\pm$ 1-order diffraction light of the third light flux is enough reduced. When the concave convex part is aperiodically arranged in this manner, the third light flux incident on the light-shielding structure T goes straight on as it is, without receiving the diffraction action, however, because the height of the step difference d1 is a half integer times of the third wavelength $\lambda 3$, the dislocation of the phase of the wave-front passing the adjoining concave convex part becomes $\pi$, and the phase of the wave-front passing the adjoining concave convex part is cancelled each other. As the result, the intensity of the light in the light converging spot by the 0-order diffraction light (non-diffraction light) of the third light flux incident on the light-shielding structure is extremely lowered, and the aperture limit function corresponding to the numerical aperture NA3 can be given to the light-shielding structure T.

Further, when there is a shape error in the rectangular pattern, the transmission of the incident light flux is lowered by the influence of the scattering of the error part, and as larger the area forming the light-shielding structure T increases, this transmission lowering becomes large. On the one hand, in order to give the aperture limit function corresponding to the numerical aperture NA3 to the light-shielding structure T, it is necessary that, in the ray of light passing the area of the outside of the numerical aperture NA3, the ray of light converged in the vicinity of the spot formed on the information recording surface (RL3) of the third optical disk (for example, CD), is at least light-shielded.

In the wavelength selection element WSE in Fig. 2, because the ray of light passing the second (b) area R2(b) is collected in the vicinity of the spot, and the ray of light passing the second (a) area R2(a) is spread at the position sufficiently far separated from the spot, the light-shielding structure T is formed only in the second (b) area R2(b), and the second (a) area R2(a) is structured as the continuous surface in which the light-shielding structure T is not formed. Hereby, the aperture limit function corresponding to the numerical aperture NA3 is given, and the influence of the transmission lowering due to the shape error of the rectangular pattern is reduced.

Hereupon, in contrast with the wavelength selection element WSE in Fig. 2, when the ray of light passing the second (a) area R2(a) is collected in the vicinity of the spot and the ray of light passing the second (b) area R2(b) is spread in the position sufficiently far separated from the spot, it is preferable that the light-shielding structure T is formed only in the second (a) area R2(a) and the second (b) area R2(b) is formed as a continuous surface in which the light-shielding structure T is not formed.

In the present embodiment, it is preferable that the light flux whose aberration is compensated by the phase structure formed in the first area, is any one light flux of the second light flux and the third light flux.

It is preferable that the phase structure compensates the aberration by diffracting at least one light flux of the second light flux and the third light flux and increasing the divergent angle.

Further, it is one of further preferable modes that the wavelength selection element has the third area structuring the central area including the optical axis of the optical element on the optical surface S2 different from the optical surface S1 on the light source side, and the third area has the second phase structure being capable of compensating the aberration of the light flux whose aberration is not compensated by the phase structure, in the second or third light flux.

It is one of the preferable modes that the second phase structure of the wavelength selection element compensates the aberration by diffracting the light flux whose aberration is not compensated by the phase structure and by increasing the divergent angle.

As the wavelength selection element in the present embodiment, it is one of preferable modes that the phase structure is capable of compensating the aberration of the third light flux, and the phase structure is a structure in which patterns whose sectional shape including the optical axis is rectangular are arranged concentric circularly, and when the step difference depth of the phase structure is d1, the refractive index to the first light flux of the optical element is n1, and the refractive index to the second light flux of the optical element is n2, x1 and x2 expressed by the following expressions respectively satisfy the following relational expressions.

$$x1 = (d1 \times (n1\lambda1 - 1))/\lambda1$$

$$x2 = (d1 \times (n2\lambda2 - 1))/\lambda2,$$

$$0 \leq |\text{INT} (x1) -1| \leq 0.1$$

$$0 \leq |\text{INT} (x2) -1| \leq 0.1$$

Where, INT(x1), INT(x2) respectively express, a natural number closest to x1, a natural number closest to x2.

In the above embodiment, it is further preferable that the second phase structure provided on the optical surface S2 different from the optical surface S1 on the light source side is capable compensating the aberration of the second light flux, and the second phase structure is a structure in which patterns whose sectional shape including the optical axis is stepwise shape are arranged concentric circularly, and when the step difference depth of one of step shaped patterns of the second phase structure is d3, the refractive index to the first light flux of the optical element is n1, and the refractive index to the third light flux of the optical element is n3, x1 and x3 expressed by the following expressions respectively satisfy the following relational expressions.

$$x1 = (d3 \times (n1\lambda1 - 1))/\lambda1$$

$$x2 = (d3 \times (n3\lambda3 - 1))/\lambda3,$$

$$0 \leq |\text{INT}(x1) - 1| \leq 0.1$$

$$0 \leq |\text{INT}(x3) - 1| \leq 0.1$$

Where, INT(x1), INT(x3) respectively express, a natural number closest to x1, a natural number closest to x3.

In the wavelength selection element, it is preferable that each of the patterns of the second phase structure has predetermined number of level surfaces, and each of the steps of the pattern is shifted in accordance with the number of the level surfaces.

As an another mode of the wavelength selection element, it is one of preferable modes that the phase structure is capable of compensating the aberration of the second light flux, and the first phase structure is a structure in which patterns whose sectional shape including the optical axis is a stepwise shape are arranged concentric circularly, and when the step difference depth of one of the stepwise patterns of the first phase structure is d1, the refractive index to the first light flux of the optical element is n1, and the refractive index to the third light flux of the optical element is n3, x1 and x3 expressed by the following expressions respectively satisfy the following relational expressions.

$$x1 = (d1 \times (n1\lambda1 - 1))/\lambda1$$

$$x3 = (d1 \times (n3\lambda3 - 1))/\lambda3,$$

$$0 \leq |\text{INT}(x1) - 1| \leq 0.1$$

$$0 \leq |\text{INT}(x3) - 1| \leq 0.1$$

Where, INT(x1), INT(x3) respectively express a natural number closest to x1, a natural number closest to x3.

In the wavelength selection element, it is preferable that each of the patterns of the phase structure has predetermined number of level surfaces, and each of the steps of the pattern is shifted in accordance with the number of the level surfaces.

Further, in the above embodiment, it is preferable that the second phase structure is capable of compensating the aberration of the third light flux, and the second phase structure is a structure in which patterns whose sectional shape including the optical axis is rectangular are arranged concentric circularly, and when the step difference depth of the second phase structure is d3, the refractive index to the first light flux of the optical element is n1, and the refractive index to the second light flux of the optical element is n2, x1 and x3 expressed by the following expressions respectively satisfy the following relational expressions.

$$x1 = (d3 \times (n1\lambda1 - 1))/\lambda1$$

$$x2 = (d3 \times (n2\lambda2 - 1))/\lambda2,$$

$$0 \leq |\text{INT}(x1) - 1| \leq 0.1$$

$$0 \leq |\text{INT} (x2) -1| \leq 0.1$$

Where, INT(x1), INT(x2) respectively express a natural number closest to x1, a natural number closest to x2.

The wavelength selection element may be an objective lens which is a light converging lens, or a lens separately provided from the objective lens, and when the wavelength selection element is a lens separately provided from the objective lens, it is further preferable that the wavelength selection element and the objective lens are held so that the mutual relative positional relationship is constant. Further, it is one of preferable modes that the wavelength selection element is made of resin.

In the wavelength selection element, it is one of preferable modes that the resin layer in which the phase structure and light-shielding structure are formed, is formed on the glass substrate.

As the wavelength selection element WSE, all optical resins or optical glass are applicable, however, in order to form the light-shielding structure T which is a minute structure, phase structure D1 or second phase structure D2, a material whose viscosity under the fused condition is small, that is, the resin used for the optical purpose (called optical resin) is adequate. Further, when the optical resin is used, as compared to the case where the optical glass is used, an element of stable performance can be mass-produced at low cost. Further, because it is light weight, it is enough even when the drive force of the actuator AC1 (refer to Fig. 3) for driving the objective optical system is small. Other than that, when the wavelength selection element WSE of so-called hybrid structure in which resin layers in which the light-shielding structure T, phase structure D1 or second phase structure D2 is formed are laminated, is formed on the glass substrate, as the resin layer, the ultraviolet ray hardened resin is adequate in the manufacture.

In the present specification, the optical disk for which a blue violet semiconductor laser or blue violet SHG laser is used as the light source for the recording/reproducing of the information, is generally called "high density optical disk", and other than the optical disk (for example, blue ray disk, abbreviated as BD) of a standard in which the recording/reproducing of the information is conducted by the objective optical system of NA 0.85, and the thickness of the protective layer is about 0.1 mm, the optical disk (for example, HD DVD, abbreviated as HD) of a standard in which the recording/reproducing of the information is conducted by the objective optical system of NA 0.65 to 0.67, and the thickness of the protective layer is about 0.6 mm, is also included. Further, other than the optical disk having such a protective layer on its information recording surface, the optical disk having the protective layer whose thickness is about several - several tens nm on the information recording surface, or the optical disk whose thickness of the protective layer or thickness of the protective film is 0, is also included. Further, in the present specification, in the high density optical disk, the photo-magnetic disk which uses the blue violet semiconductor laser or blue violet SHG laser as the light source for the recording/reproducing of the information, is also included.

Further, in the present specification, DVD is a general name of a DVD series optical disk such as DVD-ROM, DVD-Video, DVD-Audio, DVD-RAM, DVD-R, DVD-RW, DVD+R, DVD+RW, and CD is a general name of a CD series optical disk such as CD-ROM, CD-Audio, CD-Video, CD-R, CD-RW. In the recording density, the high density optical disk is highest, and subsequently, it becomes low in order of DVD, CD.

Further, in the present specification, the "objective optical system" indicates, in the optical pick-up apparatus, the optical system which is arranged at a position facing the optical disk, and at least includes the light converging element having the function by which the light fluxes which are projected from the light source and whose wavelengths are different from each other, are light converged on respective information recording surfaces of the optical disks whose recording densities are different from each other.

Further, when there is the optical element which is integrated with the light converging element and which conducts tracking and focusing by the actuator, the optical system which is structured by these optical element and light converging element, is the objective optical system. When the objective optical system is structured by a plurality of optical elements in this manner, the phase structure may also be formed on the optical surface of the light converging element, however, in order to reduce the influence of the eclipse of the light flux by the step difference part of the phase structure, it is preferable that the phase structure is formed on the optical surface of the optical element other than the light converging element.

**PREFERRED EMBODIMENTS OF THE INVENTION**

Embodiments of the present invention will be described by using the drawings below. Initially, by using Fig. 1, an optical pick up apparatus using the wavelength selection element according to the embodiment of the present invention will be described.

Fig. 3 is a view generally showing the structure of the optical pick-up apparatus PU by which the recording/reproducing of the information can be adequately conducted on any one of BD, DVD and CD. The optical specification of BD is: the first wavelength $\lambda 1 = 405$ nm, the thickness t1 of protective layer PL1 = 0.1 mm, the numerical aperture NA1 = 0.85; the optical specification of DVD is: the second wavelength $\lambda 2$ = 658 nm, the thickness t2 of protective layer PL2 = 0.6 mm, the numerical aperture NA2 = 0.60; and the optical specification of CD is: the third wavelength $\lambda 3$ = 785 nm, the thickness t3 of protective layer PL3 = 1.2 mm, the numerical aperture NA3 = 0.45. However, a combination of the wavelength, thickness of protective layer, and numerical aperture is not limited to this.

The optical pick-up apparatus PU is structured by: a blue violet semiconductor laser LD1 (the first light source) which projects the laser light flux (the first light flux) of 405 nm emitted when the recording/reproducing of the information is conducted on BD; a DVD/CD-use laser light source unit LU in which the first light emitting point (the second light source) EP1 which projects the laser light flux (the second light flux) of 655 nm emitted when the recording/reproducing of the information is conducted on DVD, and the second light emitting point (the third light source) EP2 which projects the laser light flux (the third light flux) of 785 nm emitted when the recording/reproducing of the information is conducted on CD, are formed on one chip; a photo detector PD commonly used for BD/DVD/CD; an objective optical element OBJ structured by the wavelength selection element WSE and the light converging element CE, both surfaces of which are aspheric, having a function by which the laser light fluxes transmitted this wavelength selection element WSE are converged on the information recording surfaces RL1, RL2, RL3; a 2-axis actuator AC1; a 1-axis actuator AC2; an expander lens EXP structured by the first lens EXP1 whose paraxial refractive index is negative, and the second lens EXP2 whose paraxial refractive index is positive; the first polarizing beam splitter BS1; the second polarizing beam splitter BS2; the first collimator lens COL1; the second collimator lens COL2; the third collimator lens COL3; and a sensor lens SEN for adding the astigmatism to the reflection light fluxes from the information recording surfaces RL1, RL2, and RL3. Hereupon, as the light source for BD, other than the blue violet semiconductor laser LD1, the blue violet SHG laser can also be used.

In the optical pick-up apparatus PU, when the recording/reproducing of the information is conducted on BD, as its light ray path is drawn by a solid line in Fig. 3, initially, the blue violet semiconductor laser LD1 is light emitted. The divergent light flux projected from the blue violet semiconductor laser LD1 is converted into a parallel light flux by the first collimator lens COL1, and after that, it is reflected by the first polarizing beam splitter BS1, it passes the second polarizing beam splitter BS2, and after its diameter is expanded when it transmits the first lens EXP1, second lens EXP2, it becomes a spot formed on the information recording surface RL1 through the protective layer PL1 of BD by the objective optical system OBJ. The objective optical system OBJ is structured in such a manner that the focusing or tracking is conducted by 2-axis actuator AC1 arranged in its periphery.

The reflection light flux modulated by the information pit on the information recording surface RL1 becomes, after transmits again the objective optical system OBJ, second lens EXP2, first lens EXP1, second polarizing beam splitter BS2, first polarizing beam splitter BS1, the converging light flux when it passes the third collimator lens COL3, and the astigmatism is added to it by the sensor lens SEN, and it is converged on the light receiving surface of the photo detector PD. Then, by using the output signal of the photo detector PD, the information recorded in BD can be read.

Further, in the optical pick-up apparatus PU, when the recording/reproducing of the information is conducted on DVD, the light emitting point EP1 is light emitted. The divergent light flux projected from the light emitting point EP1 is, as its light ray path is drawn by a dotted line in Fig. 3, after converted into a parallel light flux by the second collimator lens COL2, it is reflected by the second polarizing beam splitter BS2, after its diameter is expanded when it transmits the first lens EXP1, second lens EXP2, it becomes a spot formed on the information recording surface RL2 through the protective layer PL2 of DVD by the objective optical system OBJ. The objective optical system OBJ is structured in such a manner that the focusing or tracking is conducted by 2-axis actuator AC1 arranged in its periphery.

The reflection light flux modulated by the information pit on the information recording surface RL2 becomes, after transmits again the objective optical system OBJ, second lens EXP2, first lens EXP1, second polarizing beam splitter BS2, first polarizing beam splitter BS1, the converging light flux when it passes the third collimator lens COL3, and the astigmatism is added to it by the sensor lens SEN, and it is converged on the light receiving surface of the photo detector PD. Then, by using the output signal of the photo detector PD, the information recorded in DVD can be read.

Further, in the optical pick-up apparatus PU, when the recording/reproducing of the information is conducted on CD, the light emitting point EP2 is light emitted. The divergent light flux projected from the light emitting point EP2 is, as its light ray path is drawn by a one-dotted chain line in Fig. 3, after converted into a parallel light flux by the second collimator lens COL2, it is reflected by the second polarizing beam splitter BS2, and its diameter is expanded when it transmits the first lens EXP1, second lens EXP2, it becomes a spot formed on the information recording surface RL3 through the protective layer PL3 of CD by the objective optical system OBJ. The objective optical system OBJ is structured in such a manner that the focusing or tracking is conducted by 2-axis actuator AC1 arranged in its periphery.

The reflection light flux modulated by the information pit on the information recording surface RL2 becomes, atter transmits again the objective optical system OBJ, second lens EXP2, first lens EXP1, second polarizing beam splitter BS2, first polarizing beam splitter BS1, the converging light flux when it passes the third collimator lens COL3, and the astigmatism is added to it by the sensor lens SEN, and it is converged on the light receiving surface of the photo detector PD. Then, by using the output signal of the photo detector PD, the information recorded in CD can be read.

In the optical pick-up apparatus of the present embodiment, the wavelength selection element WSE and the light converging element CE as the exclusive use lens for BD, are integrated coaxially through a jointing member B. Specifically, they are structured in such a manner that the wavelength selection element WSE is engaged and fixed on one end of the cylindrical jointing member B, and on the other end, the light converging element CE is engaged and fixed, and they are integrated coaxially along the optical axis X. Hereupon, when the wavelength selection element WSE and the light converging element CE are integrated, it is suitable when the mutual relative positional relationship of the wavelength selection element WSE and the light converging element CE is held so that it is constant, and other than the method through the jointing member B, a method by which respective mutual flange parts of the wavelength selection element WSE and the light converging element CE are engaged and fixed, may also be suitable.

In this manner, when the mutual relative positional relationship of the wavelength selection element WSE and the light converging element CE is held so that it is constant, the generation of the aberration at the time of the focusing or tracking can be suppressed, and the good focusing characteristic or tracking characteristic can be obtained.

Further, when the first lens EXP1 of the expander lens EXP is driven in the optical axis direction by 1-axis actuator AC2, the spherical aberration of the spot formed on the information recording surface RL1 of BD can be compensated. The cause of generation of the spherical aberration to be compensated by the position adjustment of the first lens EXP1 is, for example, the wavelength dispersion by the production error of the blue violet semiconductor laser LD1, the refractive index change or refractive index distribution of the objective lens system following the temperature change, the focus jump between the information recording layers of multi-layer disk such as 2-layer disk or 4-layer disk, or the thickness dispersion or thickness distribution by the production error of the protective layer of BD. Hereupon, instead of the first lens EXP1, even when a structure by which the second lens EXP2 or the first collimator lens COL1 is driven in the optical axis direction, is applied, the spherical aberration of the spot formed on the information recording surface RL1 of BD can be compensated.

Further, in the above description, a structure by which, when the first lens EXP1 is driven in the optical axis direction, the spherical aberration of the spot formed on the information recording surface RL1 of BD is compensated, is applied, however, a structure by which the spherical aberration of the spot formed on the information recording surface RL2 of DVD, furthermore, the spherical aberration of the spot formed on the information recording surface RL3 of CD is compensated, may also be applied.

Further, in the present embodiment, the DVD/CD use laser light source unit in which the first light emitting point EP1 and the second light emitting point EP2 are formed on one chip is used, however, it is not limited to this, a BD/DVD/CD use one chip laser light source unit LU in which further the light emitting point projecting the laser light flux of wavelength 405 nm of BD is also formed on the same chip, may also be used. Alternatively, the BD/DVD/CD use 1-can laser light source unit in which 3 laser light sources of the blue violet semiconductor laser, red semiconductor laser, and infrared semiconductor laser are housed in one casing may also be used.

Further, in the present embodiment, a structure in which the light source and the photo detector PD are separately arranged, is applied, however, it is not limited to this, a laser light source module in which the light source and the photo detector PD are integrated may also be used.

Hereupon, in the present embodiment, a structure in which the wavelength selection element WSE and the light converging element CE are arranged as separated optical elements is applied, however, it is not limited to this, when, on the optical surface of the light converging element CE, the phase structure D1, light-shielding structure T, and the second phase structure D2 are formed, a system in which a function of the wavelength selection element WSE is given to the light converging element CE may also be used as the objective optical system OBJ.

**CONCRETE EXAMPLE**

(A numeric value example)

Next, a specific numeric value example of the objective optical system OBJ which is composed of the wavelength selection element WSE and the light converging element CE as shown in Fig. 1, and used for the optical pick-up apparatus in Fig. 3 will be shown. Hereupon, the wavelength selection element WSE and the light converging element CE are made of resin. Hereupon, the light converging element CE may also be made of glass. The lens data and the specification are shown in Table 1. In Table 1, r (mm) is a radius of curvature, d (mm) is a lens interval, $N_{BD}$, $N_{DVD}$, $N_{CD}$ are respectively, refractive index of the lens to the first wavelength $\lambda1$ (=408 nm), second wavelength $\lambda2$ (=658 nm), third wavelength $\lambda3$ (=785 nm), vd is Abbe's number of d-line, $dor_{BD}$, $dor_{DVD}$, $dor_{CD}$ are respectively the diffraction order of the diffraction light used for the recording/reproducing on BD, the diffraction order of the diffraction light used for the recording/reproducing on DVD, the diffraction order of the diffraction light used for the recording/reproducing on CD. Further, an exponent of 10 (for example, $2.5 \times 10^{-3}$) is expressed by using E (for example, 2.5E-3).

Table 1

| [Paraxial data] | | | | | | | | |
|---|---|---|---|---|---|---|---|---|
| surface No. | r (mm) | d(mm) | $N_{BD}$ | $N_{DVD}$ | $N_{CD}$ | $N_d$ | $v_d$ | note |
| OBJ | | ∞ | | | | | | *1 |
| 1 | ∞ | 1.2000 | 1.524243 | 1.506434 | 1.504969 | 1.509142 | 56.5 | *2 |
| 2 | ∞ | 0.2000 | | | | | | |
| 3 | 1.4492 | 2.6200 | 1.559645 | 1.540621 | 1.537237 | 1.543512 | 56.3 | *3 |
| 4 | -2.8750 | d4 | | | | | | |
| 5 | ∞ | d5 | 1.621095 | 1.579750 | 1.573263 | 1.585463 | 30.0 | *4 |
| 6 | ∞ | | | | | | | |

d4$_{BD}$=0.7187, d4$_{DVD}$=0.4851, d4$_{CD}$=0.3170, d5$_{BD}$=0.0875, d5$_{DVD}$=0.6000, d5$_{CD}$=1.2000
*1: light emitting point
*2: wavelength selection element
*3: light converging element
*4: protective layer

| (Aspheric surface coefficient) | | |
|---|---|---|
| | the 3-rd surface | the 4-th surface |
| κ | -0.652486 | -43.575572 |
| A4 | 0.77549E-02 | 0.97256E-01 |
| A6 | 0.29588E-03 | -0.10617E+00 |
| A8 | 0.19226E-02 | 0.81812E-01 |
| A10 | -0.12294E-02 | -0.41190E-01 |
| A12 | 0.29138E-03 | 0.11458E-01 |
| A14 | 0.21569E-03 | -0.13277E-02 |
| A16 | -0.16850E-03 | 0.00000E+00 |
| A18 | 0.44948E-04 | 0.00000E+00 |
| A20 | -0.43471E-05 | 0.00000E+00 |

| (Diffraction surface coefficient) | | |
|---|---|---|
| | the 1st surface | the 2nd surface |
| dor$_{BD}$/dor$_{DVD}$/dor$_{CD}$ | 0/1/0 | 0/0/1 |
| λB | 658 nm | 785 nm |
| B2 | 0.36500E-02 | 0.22000E-01 |
| B4 | -0.10196E-02 | -0.16995E-02 |
| B6 | 0.16630E-04 | 0.76582E-03 |
| B8 | -0.93691E-04 | -0.27689E-03 |
| B10 | 0.90441E-05 | 0.23084E-04 |

In the present numeric value example, an optical path difference added to the incident light flux by the phase structure D1 and the second phase structure D2 is expressed by the following optical path difference function $\phi$ (mm).
(Optical path difference function)

$$\phi = \lambda/\lambda_B \times dor \times (B_2y^2 + B_4y^4 + B_4y^6 + B_8y^8 + B_{10}y^{10}),$$

Where, $\phi$: optical path difference function, $\lambda$: wavelength of the light flux incident on the diffraction structure, $\lambda_B$: production wavelength, dor: diffraction order of the diffraction light used for the recording/reproducing on the optical disk, y: distance from the optical axis, $B_2$, $B_4$, $B_6$, $B_8$, $B_{10}$: diffraction surface coefficients.

Further, the optical surface of the objective lens system is formed into an aspheric surface which is axially symmetric around the optical axis, which is regulated by an equation in which coefficients shown in Table 1 are respectively substituted into the following aspheric surface expression.

(Aspheric surface expression)

$$z = (y^2/R)/[1+\sqrt{\{1-(K+1)(y/R)^2\}}] + A_4y^4 + A_6y^6 + A_8y^8 + A_{10}y^{10} +$$

$$A_{12}y^{12} + A_{14}y^{14} + A_{16}y^{16} + A_{18}y^{18} + A_{20}y^{20}.$$

Where, z: aspheric surface shape (distance in the direction along the optical axis from the surface top of the aspheric surface), y: distance from the optical axis, R: radius of curvature, K: conic coefficient, A4, A6, A8, A10, A12, A14, A16, A18, A20: aspheric surface coefficients.

The phase structure D1 formed in the first area R1 (an area corresponding to within NA3) on the optical disk side of the wavelength selection element WSE is a structure in which rectangular patterns are arranged, and its height $\Delta$1 is set to 3.89 $\mu$m. Further, in the second area which is an area corresponding to the outside of the NA3, the light-shielding structure T which is a structure in which rectangular patterns whose height is the same as that of the phase structure, are arranged, is formed, and the width of one period of the concave convex part is set to 10 $\mu$m, and its width is constant in the second area R2. Hereupon, on the optical surface S2 on the optical disk side of the wavelength selection element WSE, the diameter of the first area R1 is 2.22 mm.

Further, in the present numeric value example, because the ray of light passing the peripheral part of the second area R2 is collected in the vicinity of the spot, and the ray of light passing the inside (a side near the first area R1) of the second area R2 is spread in the position far separated from the spot, as shown in Fig. 2, the second area R2 is divided into the second (a)area R2(a) adjoining the outside of the first area R1, and the second (b) area R2(b) positioned at the outside of the second (a) area R2 (a), and even when a continuous surface in which the light-shielding structure T is formed only in the second (b) area R2(b), and the light-shielding structure T is not formed in the second (a) area R2(a), is applied, the aperture limit function corresponding to the numerical aperture NA3 can be given to the light-shielding structure T.

Hereupon, in the objective optical system OBJ of the present numeric value example, because the stop STO of the diameter of 3.74 mm corresponding to NA1 = 0.85 is arranged at the surface top position of the optical surface S3 on the light source side of the light converging element CE, the diameters of the first light flux to the third light flux passed the wavelength selection element WSE are regulated by this stop. Further, the numerical aperture and the entrance pupil diameter when each of BD, DVD, CD is used, are shown in Table 2.

Table 2

|  | BD | DVD | CD |
|---|---|---|---|
| Wavelength (nm) | 408 | 658 | 785 |
| Numerical aperture | 0.85 | 0.60 | 0.45 |
| Entrance pupil diameter (mm) | 3.74 | 2.75 | 2.22 |

**EFFECTS OF THE INVENTION**

According to the present invention, although the recording and/or reproducing of the information can be adequately conducted on the three kinds of optical disks which are different from each other, an optical pick-up apparatus by which the size reduction can be intended, a drive apparatus of the optical disks, an objective optical system and a wavelength selection element, used for it, can be provided.

**Claims**

1. An optical element for use in an optical pick-up apparatus for conducting recording and/or reproducing information of each of a first optical disk, a second optical disk and a third optical disk by using each of a first light flux emitted having first wavelength $\lambda 1$, a second light flux having second wavelength $\lambda 2$ ($\lambda 1 < \lambda 2$) and a third light flux having third wavelength $\lambda 3$ ($\lambda 2 < \lambda 3$),
   wherein the optical element (WSE) comprises a first optical surface (S2) having a first area (R1) including the optical axis of the optical element, and a second area (R2) positioned outside the first area (R1),
   wherein the second area (R2) includes a light-shielding structure (T) being capable of substantially shielding the third light flux, and being capable of transmitting the first light flux and the second light flux, and
   wherein the third light flux passing the second area (R2) does not effectively contribute to conduct recording and/or reproducing on the third optical disk, **characterized in that**
   the first area (R1) has a first phase structure (D1) being capable of compensating an aberration of at least one light flux of the first to third light flux and being formed in contact with air,
   the light-shielding structure (T) has patterns whose sectional shape including the optical axis is rectangular, the patterns being arranged, concentrically around the optical axis, and being formed in contact with air, and
   the width of the patterns of said light-shielding structure T becomes smaller towards the outer periphery.

2. The optical element of claim 1, wherein the first wavelength $\lambda 1$ and the second wavelength $\lambda 2$ satisfy the following relational expressions, respectively.

$$390 \text{ nm} < \lambda 1 \leq 420 \text{ nm}$$

$$630 \text{ nm} < \lambda 2 \leq 680 \text{ nm}$$

3. The optical element of claim 1 or 2, wherein the third wavelength $\lambda 3$ satisfies the following formula:

$$750 \text{ nm} < \lambda 3 < 800 \text{ nm}$$

4. The optical element of claim 1, 2 or 3, wherein the second area (R2) includes a second (a) area (R2(a)) adjoining a periphery of the first area (R1), and a second (b) area (R2(b)) positioned outside of the second (a) area (R2(a)), and the light-shielding structure (T) is formed in any one area of the second (a) area (R2(a)) and the second (b) area (R2(b)), and the other area is structured by a continuous surface on which the light-shielding structure is not formed.

5. The optical element of any one of claims 1 to 4, wherein the first phase structure (D1) is capable of compensating aberration of at least one light flux of the second light flux and the third light flux.

6. The optical element of any one of the preceding claims, wherein the first phase structure (D1) is capable of compensating aberration by increasing a divergent angle of at least one light flux of the second light flux and the third light flux by diffracting the light flux.

7. The optical element of any one of the preceding claims, wherein the optical element (WSE) is made of resin.

8. The optical element of any one of claims 1 to 6, wherein the optical element includes a glass substrate and a resin layer on the glass substrate, and the light-shielding structure (T) is formed on the resin layer.

9. The optical element of any one of the preceding claims, wherein the optical element is an objective lens.

10. An objective optical system (OBJ) comprising an optical element according to any one of claims 1 to 8 and an objective lens (CE) on the optical disk side of the optical element (WSE), and
the optical element and the objective lens being held so that mutual relative position is fixed.

11. An optical pick-up apparatus (PU) comprising:

a first light source (LD1) emitting a first light flux of first wavelength λ1;
a second light source (EP1) emitting a second light flux of second wavelength λ2 (λ1 < λ2);
a third light source (EP2) emitting a third light flux of third wavelength λ3 (λ2 < λ3); and
an optical element (WSE) according to any one of claims 1 to 9 positioned so that the first light flux, the second light flux and the third light flux pass through the optical element (WSE),
wherein the optical pick-up apparatus (PU) conducts recording and/or reproducing of information of a first optical disk having a protective layer of thickness t1 by using the first light flux, recording and/or reproducing of information of a second optical disk having a protective layer of thickness t2 (t2 ≥ t1) by using the second light flux, and recording and/or reproducing of the information on a third optical disk having a protective layer of thickness t3 (t3 > t2) by using the third light flux.

12. The optical pick-up apparatus of claim 11,
wherein the optical pick-up apparatus (PU) further comprises an objective lens (CE) on the optical disk side of the optical element (WSE), and the optical element (WSE) and the objective lens (CE) are held so that mutual relative position is fixed.

13. A drive apparatus for an optical disk, comprising:

the optical pick-up apparatus (PU) of claim 11 or 12, and
a moving device for moving the optical pick-up apparatus in a direction perpendicular to the radius direction of the optical disk, and the recording and/or reproducing of the information is conducted by the optical pick-up apparatus.

**Patentansprüche**

1. Optisches Element zur Verwendung in einer optischen Bildaufnahmevorrichtung zur Durchführung von Aufzeichnung und/oder Wiedergabe von Information für eine erste optische Platte, eine zweite optische Platte und eine dritte optische Platte mittels eines ersten Lichtflusses, der mit einer ersten Wellenlänge λ2 emittiert wird, eines zweiten Lichtflusses, der eine zweite Wellenlänge λ2 (λ1 < λ2) hat, und eines dritten Lichtflusses, der eine dritte Wellenlänge λ3 (λ2 < λ3) hat,
wobei das optische Element (WSE) eine erste optische Oberfläche (S2) umfasst, die einen ersten Bereiche (R1), der die optische Achse des optischen Elements enthält, und einen zweiten Bereich (R2), der außerhalb des ersten Bereichs (R1) angeordnet ist, enthält,
wobei der zweite Bereich (R2) eine Licht abschirmende Struktur (T) aufweist, die in der Lage ist, im Wesentlichen den dritten Lichtfluss abzuschirmen, und die in der Lage ist, den ersten Lichtfluss und den zweiten Lichtfluss durchzulassen; und
wobei der dritte Lichtfluss, der durch den zweiten Bereich (R2) durchläuft, effektiv nicht zum Aufzeichnen und/oder Wiedergeben auf der dritten optischen Platte beiträgt,
**dadurch gekennzeichnet, dass**
der erste Bereich (R1) eine erste Phasenstruktur (D1) hat, die in der Lage ist, eine Aberration von zumindest einem Lichtfluss der ersten bis dritten Lichtflüsse auszugleichen, und die in Kontakt mit Luft gebildet ist,
wobei die Licht abschirmende Struktur (T) mit Mustern versehen ist, deren Querschnitt in der optischen Achse rechteckig ist, wobei die Muster angeordnet sind, um konzentrisch um die optische Achse angeordnet zu sein, und in Kontakt mit Luft ausgebildet sind, und
wobei die Breite der Muster der lichtabschirmenden Struktur (T) hin zum äußeren Rand kleiner wird.

2. Optisches Element nach Anspruch 1, bei dem die erste Wellenlänge λ1 und die zweite Wellenlänge λ2 die folgende Relativbeziehungen erfüllen:

$$390 \ nm < \lambda 1 \leq 420 \ nm$$

$$630 \ nm < \lambda 2 \leq 680 \ nm.$$

3. Optisches Element nach Anspruch 1 oder 2, bei dem die dritte Wellenlänge λ3 die folgende Formel erfüllt:

$$750 \ nm < \lambda 3 < 800 \ nm$$

4. Optisches Element nach Anspruch 1, 2 oder 3, bei dem zweite Bereich (R2) einen zweiten (a)-Bereich (R2(a)) umfasst, der benachbart dem Rand des ersten Bereichs (R1) angeordnet ist, und einem zweiten (b)-Bereich (R2 (b)), der außerhalb des zweiten (a)-Bereichs (R2(a)) angeordnet ist, und wobei die Licht abschirmende Struktur (T) in dem zweiten (a)-Bereich (R2(a)) bzw. dem zweiten (b)-Bereich (R2(b)) gebildet ist, und wobei der andere Bereich so strukturiert ist, dass er eine kontinuierliche Oberfläche hat, auf der die Licht abschirmende Struktur nicht gebildet ist.

5. Optisches Element nach einem der Ansprüche 1 bis 4, bei dem die erste Phasenstruktur (D1) in der Lage ist, eine Aberration von zumindest einem Lichtfluss der zweiten und dritten Lichtflüsse auszugleichen.

6. Optisches Element nach einem der vorangehenden Ansprüche, bei dem die erste Phasenstruktur (D1) in der Lage ist, die Aberration durch Erhöhen eines Divergenz-Winkels zumindest eines Lichtflusses des zweiten Lichtflusses und des dritten Lichtflusses durch Streuen des Lichtflusses zu auszugleichen.

7. Optisches Element nach einem der vorangehenden Ansprüche, bei dem das optische Element (WSE) aus Harz gebildet ist.

8. Optisches Element nach einem der Ansprüche 1 bis 6, bei dem das optische Element ein Glassubstrat und eine Harzschicht auf dem Glassubstrat umfasst und wobei die Licht abschirmende Struktur (T) auf deren Harzschicht gebildet ist.

9. Optisches Element nach einem der vorangehenden Ansprüche, bei dem das optische Element eine Objektivlinse ist.

10. Optisches Objektivsystem (OBJ) mit einem optischen Element nach einem der Ansprüche 1 bis 8 und einer Objektivlinse (CE) auf der Seite der optischen Platte des optischen Elementes (WSE), und, wobei das optische Element und die Objektivlinse gehalten werden, so dass ihre jeweiligen Relativpositionen fest sind.

11. Optische Bildaufnahmevorrichtung mit:

einer ersten Lichtquelle (LD1) zum Emittieren eines ersten Lichtflusses mit einer Wellenlänge λ1;
einer zweiten Lichtquelle (EP1) zum Emittieren eines zweiten Lichtflusses mit einer zweiten Wellenlänge λ2 (λ1 < λ2);
einer dritten Lichtquelle (EP2) zum Emittieren eines dritten Lichtflusses mit einer dritten Wellenlänge λ3 (λ2 < λ3); und
einem optischen Element (WSE) entsprechend einem der Ansprüche 1 bis 9, das so angeordnet ist, dass der erste Lichtfluss, der zweite Lichtfluss und der dritte Lichtfluss durch das optische Element (WSE) durchlaufen; wobei die optische Bildaufnahmevorrichtung (PU) ein Aufzeichnen und/oder Wiedergeben von Information von einer ersten optischen Platte mit einer Schutzschicht einer Dicke t1 mittels des ersten Lichtflusses, ein Aufzeichnen und/oder Wiedergeben von Information von einer zweiten optischen Platte mit einer Schutzschicht einer Dicke t2 (t2 ≥ t1) mit dem zweiten Lichtfluss, und ein Aufzeichnen und/oder Wiedergeben von Information auf einer dritten optischen Platte mit einer Schutzschicht einer Dicke t3 (t3 > t2) durch den dritten Lichtfluss durchführt.

**12.** Optische Bildaufnahmevorrichtung nach Anspruch 11, bei der die optische Bildaufnahmevorrichtung (PU) des weiteren eine Objektivlinse (CE) auf der Seite der optischen Platte des optischen Elements (WSE) aufweist, und wobei das optische Element (WSE) und die Objektivlinse so gehalten werden, dass ihre jeweilige Relativposition fest ist.

**13.** Abspielgerät für eine optische Platte mit:

einer optischen Bildaufnahmevorrichtung (PU) nach Anspruch 11 oder Anspruch 12, und
einer beweglichen Vorrichtung zum Bewegen der optischen Bildaufnahmevorrichtung in einer Richtung senkrecht zur Radiusrichtung der optischen Platte, und wobei das Aufzeichnen und/oder Wiedergeben von Information durch die optische Bildaufnahmevorrichtung ausgeführt wird.

**Revendications**

**1.** Elément optique destiné à être utilisé dans un dispositif de capteur optique pour réaliser un enregistrement et/ou une reproduction d'informations de chacun d'un premier disque optique, un deuxième disque optique et un troisième disque optique en utilisant chacun d'un premier flux lumineux émis avec une première longueur d'onde λ1, un deuxième flux lumineux ayant une deuxième longueur d'onde λ2 (λ1 < λ2) et un troisième flux lumineux ayant une troisième longueur d'onde λ3 (λ2 < λ3),

dans lequel l'élément optique (WSE) comprend une première surface optique (S2) ayant une première zone (R1) incluant l'axe optique de l'élément optique, et une deuxième zone (R2) positionnée à l'extérieur de la première zone (R1),

dans lequel la deuxième zone (R2) comprend une structure occultant la lumière (T) qui est capable d'occulter substantiellement le troisième flux lumineux, et qui est capable de transmettre le premier flux lumineux et le deuxième flux lumineux, et

dans lequel le troisième flux lumineux passant dans la deuxième zone (R2) ne contribue pas de manière effective à réaliser l'enregistrement et/ou la reproduction sur le troisième disque optique,

**caractérisé en ce que**

la première zone (R1) a une première structure de phase (D1) qui est capable de compenser une aberration d'au moins un flux lumineux parmi les premier à troisième flux et qui est formée au contact de l'air,

la structure occultant la lumière (T) comporte des motifs dont la forme en coupe incluant l'axe optique est rectangulaire, les motifs étant agencés de façon concentrique autour de l'axe optique, et étant formés au contact de l'air, et la largeur des motifs de ladite structure occultant la lumière (T) diminue en s'approchant de la périphérie extérieure.

**2.** Elément optique selon la revendication 1, dans lequel la première longueur d'onde λ1 et la deuxième longueur d'onde λ2 vérifient respectivement les inégalités suivantes :

$$390 \text{ nm} < \lambda 1 \leq 420 \text{ nm}$$

$$630 \text{ nm} < \lambda 2 \leq 680 \text{ nm}$$

**3.** Elément optique selon la revendication 1 ou 2, dans lequel la troisième longueur d'onde λ3 vérifie l'inégalité suivante :

$$750 \text{ nm} < \lambda 3 \leq 800 \text{ nm}$$

**4.** Elément optique selon la revendication 1, 2 ou 3, dans lequel la deuxième zone (R2) comprend une deuxième (a) zone (R2(a)) contiguë à une périphérie de la première zone (R1), et une deuxième (b) zone (R2(b)) positionnée à l'extérieur de la deuxième (a) zone (R2(a)), et la structure occultant la lumière (T) est formée dans l'une quelconque des deuxième (a) zone (R2(a)) et deuxième (b) zone (R2(b)), et l'autre zone est structurée par une surface continue sur laquelle n'est pas formée la structure occultant la lumière.

**5.** Elément optique selon l'une quelconque des revendications 1 à 4, dans lequel la première structure de phase (D1) est capable de compenser l'aberration d'au moins un flux lumineux parmi le deuxième flux lumineux et le troisième flux lumineux.

6. Elément optique selon l'une quelconque des revendications précédentes, dans lequel la première structure de phase (D1) est capable de compenser l'aberration en augmentant un angle divergent d'au moins un flux lumineux parmi le deuxième flux lumineux et le troisième flux lumineux en réalisant une diffraction du flux lumineux.

7. Elément optique selon l'une quelconque des revendications précédentes, dans lequel l'élément optique (WSE) est fait en résine.

8. Elément optique selon l'une quelconque des revendications 1 à 6, dans lequel l'élément optique comprend un substrat en verre et une couche de résine sur le substrat en verre, et la structure occultant la lumière (T) est formée sur la couche de résine.

9. Elément optique selon l'une quelconque des revendications précédentes, dans lequel l'élément optique est une lentille de focalisation.

10. Système optique de focalisation (OBJ) comprenant un élément optique selon l'une quelconque des revendications 1 à 8 et une lentille de focalisation (CE) du côté disque optique de l'élément optique (WSE), et l'élément optique et la lentille de focalisation étant tenues de telle manière que la position relative mutuelle est fixe.

11. Dispositif de capteur optique (PU) comprenant :

une première source de lumière (LD1) émettant un premier flux lumineux ayant une première longueur d'onde $\lambda 1$ ;
une deuxième source de lumière (EP1) émettant un deuxième flux lumineux ayant une deuxième longueur d'onde $\lambda 2$ ($\lambda 1 < \lambda 2$) ;
une troisième source de lumière (EP2) émettant un troisième flux lumineux ayant une troisième longueur d'onde $\lambda 3$ ($\lambda 2 < \lambda 3$) ; et
un élément optique (WSE) selon l'une quelconque des revendications 1 à 9, positionné de telle manière que le premier flux lumineux, le deuxième flux lumineux et le troisième flux lumineux passent à travers l'élément optique (WSE),
dans lequel le dispositif de capteur optique (PU) réalise un enregistrement et/ou une reproduction d'informations d'un premier disque optique comportant une couche protectrice d'épaisseur t1 en utilisant le premier flux lumineux, un enregistrement et/ou une reproduction d'informations d'un deuxième disque optique comportant une couche protectrice d'épaisseur t2 ($t2 \geq t1$) en utilisant le deuxième flux lumineux, et un enregistrement et/ou une reproduction des informations sur un troisième disque optique comportant une couche protectrice d'épaisseur t3 ($t3 > t2$) en utilisant le troisième flux lumineux.

12. Dispositif de capteur optique selon la revendication 11, dans lequel le dispositif de capteur optique (PU) comprend en outre une lentille de focalisation (CE) du côté disque optique de l'élément optique (WSE), et l'élément optique (WSE) et la lentille de focalisation (CE) sont tenues de telle manière que la position relative mutuelle est fixe.

13. Dispositif d'entraînement pour disque optique, comprenant :

le dispositif de capteur optique (PU) de la revendication 11 ou 12, et
un dispositif de déplacement pour déplacer le dispositif de capteur optique dans une direction perpendiculaire à la direction de rayon du disque optique, et l'enregistrement et/ou la reproduction des informations est réalisé (e) par le dispositif de capteur optique.

## FIG. 1

WSE

LIGHT SHIELDING
STRUCTURE T

THE SECOND AREA R2

PHASE
STRUCTURE D1

THE FIRST AREA R1

THE SECOND
PHASE
STRUCTURE D2

LIGHT SHIELDING
STRUCTURE T

THE SECOND AREA R2

S1

S2

# FIG. 2

WSE

LIGHT SHIELDING
STRUCTURE T

THE SECOND (b) AREA R2(b) ⎫ THE
                         ⎬ SECOND
THE SECOND (a) AREA R2(a) ⎭ AREA R2

PHASE STRUCTURE D1

THE FIRST AREA R1

THE SECOND
PHASE
STRUCTURE D2

THE SECOND (a) AREA R2(a) ⎫ THE
                         ⎬ SECOND
THE SECOND (b) AREA R2(b) ⎭ AREA R2

LIGHT SHIELDING
STRUCTURE T

S1          S2

# FIG. 3

PL1 / PL2 / PL3
RL1 / RL2 / RL3
BD / DVD / CD

CE

OBJ

AC1

WSE

PU

EXP2

EXP1

COL2

LU

BS2

EP2

EP1

BS1

COL1

LD1

COL3

SEN

PD

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004138635 A
- JP 11194207 A
- WO 2004012188 A
- WO 03091764 A
- WO 03060892 A